Europäisches Patentamt

European Patent Office

Office européen des brevets

(11) Publication number : **0 561 554 A1**

# (12) EUROPEAN PATENT APPLICATION

(21) Application number : **93301818.6**

(22) Date of filing : **10.03.93**

(51) Int. Cl.[5] : **C01B 7/07,** C07F 7/08

(30) Priority : **17.03.92 US 852873**

(43) Date of publication of application :
**22.09.93 Bulletin 93/38**

(84) Designated Contracting States :
**DE FR GB**

(71) Applicant : **GENERAL ELECTRIC COMPANY**
**1 River Road**
**Schenectady, NY 12345 (US)**

(72) Inventor : **McEntee, Harry Raymond**
**16 Clemente Lane**
**Waterford, New York 12188 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) Hydrogen chloride recovery process.

(57)   A process for the recovery of hydrogen chloride from an aqueous hydrochloric acid waste stream with the concurrent production of methyl chloride is disclosed employing a tertiary amine as an extracting agent and catalyst.

# FIG.1

EP 0 561 554 A1

The present invention relates to a process for the recovery of hydrogen chloride from an aqueous hydrochloric acid wastewater stream. More particularly, the present invention relates to the concurrent recovery of hydrogen chloride from an aqueous hydrochloric acid wastewater stream and the production of methyl chloride.

BACKGROUND OF THE INVENTION

A wide variety of useful siloxane products are produced by a hydrolysis reaction involving alkylhalosilanes, particularly methylchlorosilanes. The methylchlorosilanes are prepared by reaction involving the silation of methyl chloride. One of the side products of the hydrolysis reaction is hydrogen chloride in the form of aqueous hydrochloric acid. It is costly to dispose of the hydrogen chloride; and replacement of the lost chlorine also represents a substantial expense in siloxane production. It would therefore be advantageous if a process could be developed whereby the chloride from the side product aqueous hydrochloric acid could be recycled as a chlorine source for forming methyl chloride for use in subsequently forming methylchlorosilanes.

United States Patent No. 2,570,495 (Scott) discloses the production of organic halides by the reaction of alcohols with hydrogen halides which employs amine catalysts.

Mention is also made of Lewis et al., United States Patent No. 4,593,114: Lewis et al., United States Patent No. 4,973,725; and Bunce et al., United States Patent No 4,935,564. Lewis et al., United States Patent No. 4,593,114 disclose a process for the direct synthesis of cyclic and oligomeric organosiloxanes comprising reacting a hydrocarbon ether and a hydrocarbon halide with a fluidized or agitated bed of activated silicon particles with a maximum contact time of five minutes, with continuous product withdrawal.

Lewis et al., United States Patent No. 4,973,725 disclose the selective production of organohydrosilanes by the catalytic reaction of activated silicon with mixtures of organohalides and hydrogen in the presence of controlled concentrations of selected metal atoms.

Bunce et al., United States Patent No. 4,935,564 disclose a process for the preparation of an alkyl halide from reaction between the corresponding alcohol and a hydrogen halide in the absence of a catalyst with a stoichiometric excess of the alcohol in a plug flow reactor utilizing a cocurrent flow of the reactants.

It has now surprisingly been found that hydrogen chloride can be extracted from aqueous hydrochloric acid with a tertiary amine, and the extract can then be reacted with an alcohol, with the tertiary amine serving as a reaction catalyst. Such a process provides for both the recovery of hydrogen chloride from a side product hydrochloric acid stream and the concurrent production of methyl chloride, which can then be used in the production of siloxanes. Such a process thereby fulfills a long felt need in the art to efficiently recover and recycle the hydrogen chloride side product of the hydrosilation reaction.

SUMMARY OF THE INVENTION

According to the present invention there is provided a process for the recovery of hydrogen chloride from an aqueous hydrochloric acid stream and the concurrent production of methyl chloride comprising the steps of: (a) contacting an aqueous hydrochloric acid stream with a tertiary amine to form a hydrogen chloride depleted phase and a phase comprising hydrogen chloride-tertiary amine complex; (b) separating said hydrogen chloride depleted phase and said phase comprising hydrogen chloride-tertiary amine complex; (c) contacting the separated phase comprising hydrogen chloride-tertiary amine complex with an alcohol to form a phase comprising tertiary amine, methyl chloride and water; and (d) recovering methyl chloride from the product phase of step (c).

In embodiments of the present invention, where a complex between the tertiary amine and the methyl chloride is formed, a hydrocarbon solvent, such as mineral spirits, is added to the phase containing the complex and the complex is then thermally dissociated.

BRIEF DESCRIPTION OF THE DRAWINGS

FIGURE 1 is an overall diagrammatic sketch of an embodiment of the present invention.

FIGURE 2 is a diagrammatic sketch of an embodiment of the present invention including a step for the thermal dissociation of a tertiary amine-methyl chloride complex.

FIGURE 3 is a diagrammatic sketch of another embodiment of the present invention.

DETAILED DESCRIPTION OF THE INVENTION

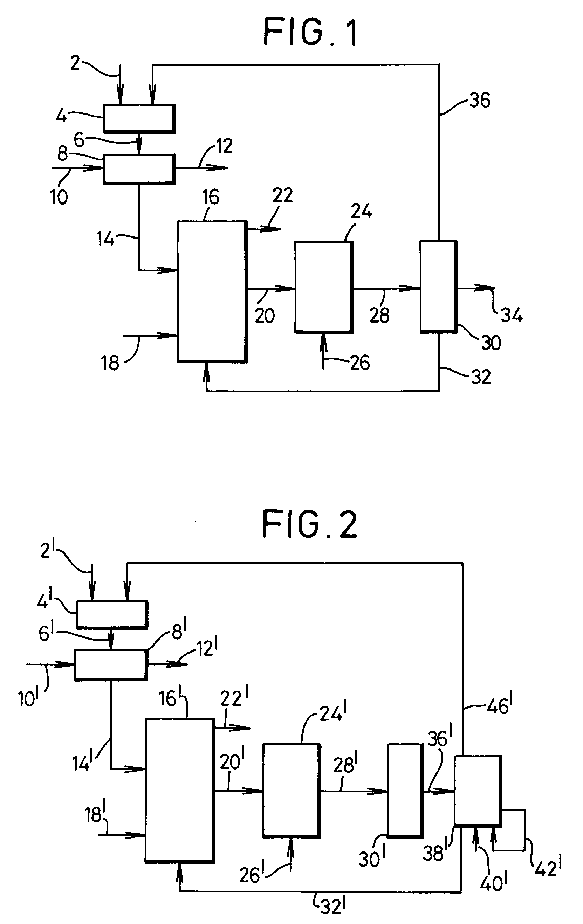

Referring to FIGURE 1, methyl chloride in a line 2 is silated in a reactor 4 to form methylchlorosilane in a line 6. This reaction is well known to those skilled in the art and is described in the literature. The methylchlorosilane is then hydrolyzed in reactor 8 with the addition of water from a line 10 to form a silicone product in a line 12. The hydrolysis reaction is well known to those skilled in the art and is described in the literature.

A side product of the siloxane reaction is aqueous hydrochloric acid. This aqueous hydrochloric acid side product in a stream 14 is fed to a contactor 16. The contactor 16 is preferably a countercurrent extractor, but can be a cocurrent extractor, batch extractor or other liquid-liquid contactor as is known to those skilled in the art.

To the contactor 16 is fed a tertiary amine, in a line 18. Preferably the tertiary amine is of low volatility, has low solubility in water and forms a complex with hydrogen chloride which has low solubility in water. Typically the tertiary amines are of the general formula $R_3N$ where R is a linear or branched alkyl or alkoxy group. Preferred tertiary amines are tripropylamine, tributylamine, tri-isobutylamine, tripentylamine, methyldiamylamine, methyl-di-ter-tamylamine, trilaurylamine, tri-n-octylamine, tri-iso-octylamine, tricaprylyl amine and the like. Most preferred are trilaurylamine, tri-n-octylamine, tri-iso-octylamine and tricaprylyl amine.

Preferably the molar ratio of hydrogen chloride charged in the aqueous hydrochloric acid to the tertiary amine charged ranges from about 0.5 to about 1.25, more preferably from about 0.75 to about 1.0.

In the contactor 16, the tertiary amine forms a complex with the hydrogen chloride. The tertiary amine-hydrogen chloride complex preferably has low solubility in water, thus forming a hydrogen chloride depleted aqueous phase and a phase comprising the tertiary amine-hydrogen chloride complex. The hydrogen chloride depleted aqueous phase is withdrawn in a line 22, and the phase comprising the tertiary amine-hydrogen chloride complex is withdrawn in a line 20.

A solvent which has a low solubility in water can also be added to the tertiary amine fed to contactor 16. Such solvents are readily available commercially and typically include aliphatic or aromatic hydrocarbons, such as, mineral spirits, V.M.&P. Naphtha, toluene, xylene, cumene or diisopropyl benzene. The solvent can be recycled throughout the entire process as a solvent for the tertiary amine, the tertiary amine-hydrogen chloride complex and the tertiary amine-methyl chloride complex as they occur in their respective process steps. A preferred molar ratio of solvent to tertiary amine is 0.1 to 2.0, and more preferably, 0.25 to 1.0.

The phase comprising the tertiary amine-hydrogen chloride complex in a line 20 is fed to a reactor 24, to which is also added an alcohol from a line 26. Preferably the alcohol is a lower alkyl alcohol, most preferably methanol. Where methyl chloride is desired to be produced, it is especially preferred that the alcohol is methanol.

The reactor 24 may be of any type known to those skilled in the art and is preferably a plug flow or continuously stirred tank reactor. In the reactor 24, the hydrogen chloride and methanol react, with the tertiary amine serving as a catalyst for the reaction to form methyl chloride, tertiary amine and water, which is withdrawn in a stream 28. The reaction is known to those skilled in the art and is described in the literature, e.g., United States Patent No. 2,570,495. The reaction will proceed at temperatures as low as 50°C. However it is desirable that the reaction temperature be maintained between about 60 and about 200°C.

The reaction may be carried out employing an excess of either reactants, however it is preferred to employ equivalent quantities of reactants or an excess of the alcohol, to ensure substantially complete reaction of all of the hydrogen chloride present. Preferably the molar ratio of methanol to hydrogen chloride ranges from about 0.5 to about 3.0, more preferably from about 0.8 to about 1.2.

The reacted products and any excess alcohol are directed in a line 28 to a separator 30. In the separator the methyl chloride, tertiary amine, water and excess alcohol are separated. The methyl chloride is removed in a line 36 and can optionally be recycled to the silation reactor 4 for production of methylchlorosilane. The tertiary amine is withdrawn through a line 32 for recycle to the contactor 16. Water and any unreacted methanol is withdrawn through a line 34. The unreacted methanol can be recovered by downstream distillation (not shown) for optional recycle to the reactor 24.

It has further been found that certain tertiary amines, such as trilaurylamine and tricaprylyl amine, form complexes with methyl chloride. In these instances recovery of the methyl chloride from the tertiary amine-methyl chloride complex needs to be effectuated, prior to recycling the methyl chloride back to the silating reactor.

Recovery of methyl chloride from the tertiary amine-methyl chloride complex can be accomplished by thermal dissociation. Thermal dissociation of the complex takes place at temperatures above about 200°C. Also, the tertiary amine-methyl chloride may be reacted with hydrogen chloride gas to form a tertiary amine-hydrogen chloride complex and methyl chloride gas.

The tertiary amine-methyl chloride complex can directly be dissociated thermally, at temperatures of about 200°C or higher, or first dissolved in a solvent, e.g. an aliphatic, aromatic or polar solvent; i.e. cyclohexane, benzene or chloroform. Preferred is an aliphatic solvent such as mineral spirits. The complex in solution can then be thermally dissociated at lower temperatures, on the order of about 150°C. Further, it has been found that where thermal dissociation of the complex in a solvent is desired, it is preferred that the amine is a ste-

EP 0 561 554 A1

rically hindered tertiary amine, such as tri-iso-octylamine.

Referring to FIGURE 2, wherein the primed reference numerals correspond to the reference numerals in FIG. 1, in the case where a tertiary amine-methyl chloride complex is formed, a stream 36' is directed to a vessel 38' wherein a solvent is optionally added through a line 40'. The solvent and complex are heated to a temperature of about 140 to about 200°C, preferably from about 150 to about 180°C, to thermally dissociate the complex. The solvent is withdrawn in a line 42' and optionally recycled back to a vessel 38', or is optionally withdrawn along with the dissociated amine in a line 32' and can optionally be recycled along with the dissociated tertiary amine to a contactor 16'; and the methyl chloride is recovered in a line 46' for recycle to a silation reactor 4'.

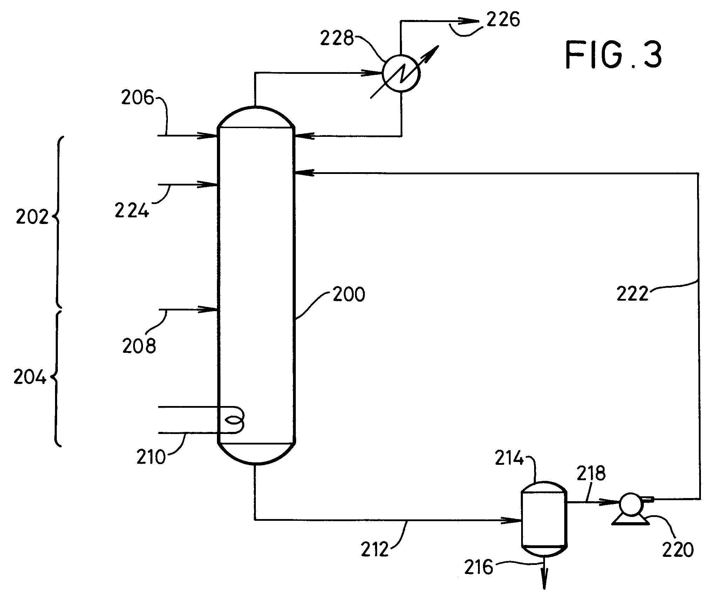

In an alternative embodiment, referring to FIGURE 3, side product hydrochloric acid in a stream 206, fresh tertiary amine catalyst in a stream 224 and methanol in a stream 208 are fed into a reaction section 202 of a reactor 200. The methanol in a stream 208 is preferably fed to a point part way down the reactor 200 near the bottom of the reaction section. The bottom portion of the reactor 200 is equipped with a reboiler 210 and operates as a distillation section 204 wherein the methanol is distilled from the water and forces the methanol upward in the reaction section. Alternatively, the reboiler 210 can be replaced with open steam.

Preferably, the reactor 200 is operated such that none of the water fed in the reactor in the aqueous side product hydrochloric acid stream is vaporized. In this manner, a two phase mixture is drawn off the bottom of the reactor 200 in a line 212. The two phase mixture is fed into a separator 214, wherein the aqueous phase depleted of hydrogen chloride is withdrawn in a line 216. The remaining phase comprising tertiary amine-hydrogen chloride complex and tertiary amine-methyl chloride phase is removed from the separator 214 in a line 218, which is recirculated back to the reactor 200 via a pump 220 and a line 222.

The top of the reactor 200 is further equipped with a reflux system 228. The tertiary amine-methyl chloride complex is dissociated in the upper portion of the reactor 200, and a methyl chloride stream is withdrawn through a line 226.

It is further contemplated by the present invention that circulation of the tertiary amine catalyst may not be necessary if sufficient agitation to mix the phases can be attained by using a packing catalyst or agitators. A solid amine resin, e.g. polyvinylpyridine could be used as the basic catalyst which can be packed into the reactor. The reactor can be operated under pressure, less than 200 psig, with a boiling temperature of 150°C. It is still further contemplated to inject hydrogen chloride gas into the reaction section to produce additional methyl chloride.

DESCRIPTION OF THE PREFERRED EMBODIMENTS

The following examples illustrate the present invention. They are not to be construed to limit the scope of the appended claims in any manner whatsoever.

EXAMPLES 1 - 8

To investigate the ability of a tertiary amine to extract hydrogen chloride from hydrochloric acid, a series of experiments were carried out at 95°C in a batch contactor in which trilaurylamine (TLA) was contacted with various concentrations and amounts of hydrochloric acid. The amounts of hydrogen chloride removed from the acid in each instance is reported below in Table 1.

4

EP 0 561 554 A1

## TABLE 1

| Example | 1 | 2 | 3 | 4 | 5 | 6 | 7 | 8 |
|---|---|---|---|---|---|---|---|---|
| **Feed** | | | | | | | | |
| Wt. % in acid charge | 27.43 | 19.30 | 19.30 | 19.30 | 9.65 | 9.65 | 4.83 | 4.83 |
| Lbs. of TLA charged per lb. acid charged | 1.00 | 1.00 | 2.00 | 2.99 | 1.48 | 2.00 | 0.70 | 1.00 |
| Mols of TLA charged per mol of HCl charged | 0.26 | 0.36 | 0.72 | 1.08 | 1.07 | 1.44 | 1.01 | 1.45 |
| **Results** | | | | | | | | |
| HCl wt. % in aqueous phase | 21.3 | 13.6 | 7.6 | 0.39 | 0.24 | 0.033 | 0.37 | 0.026 |
| HCl wt. % in TLA phase | 7.2 | 6.2 | 6.0 | 6.0 | 6.0 | 4.6 | 6.0 | 4.6 |
| % Hcl removed from charge | 28.2 | 34.0 | 65.6 | 98.4 | 97.8 | 99.7 | 92.6 | 99.5 |

From Table 1 above it can be seen that trilaurylamine is very effective in recovering hydrogen chloride from hydrochloric acid. In examples 4, 6 and 8, greater than 98 percent recovery is observed.

5

EXAMPLE 9

The following example demonstrates the extraction of hydrogen chloride for hydrochloric acid by a tertiary amine in a solution with a solvent of low solubility in water.

A solution of triisooctyl amine and V.M.&P. Naphtha was prepared. The solution contained 25.0 weight percent of V.M.&P. Naphtha. 206.8 grams of this solution was charged to a one liter Morton flask. With stirring, 143.0 grams of 9.81 weight percent hydrochloric acid were added in a matter of seconds. The temperature of the mixture rose from 25°C to 39°C in less than a minute. After thirty minutes the stirrer was stopped; and after thirty minutes of settling, the aqueous phase was drawn off. The aqueous phase weighed 116.4 grams, and the remaining organic phase weighed 234.4 grams. The aqueous phase was titrated and found to contain 0.040 weight percent of hydrogen chloride. Thus, 99.7 weight percent of the hydrogen chloride charged was extracted from the aqueous phase.

EXAMPLES 10 - 12

To investigate the use of a tertiary amine in the reaction of methanol with hydrogen chloride, a series of experiments were carried out in a continuous stirred reactor containing trilaurylamine at atmospheric pressure and at 150°C. To the reactor is continuously added hydrogen chloride gas and methanol, with removal of methyl chloride gas as it formed. Various mol ratios of methanol to hydrogen chloride was used, and the results are reported in Table 2 below.

Table 2

| Example | 10 | 11 | 12 |
|---|---|---|---|
| Mol ratio MeOH/HCl in feed | 0.455 | 1.075 | 1.927 |
| Dimethylether in methyl chloride, ppm by weight | 365 | 670 | 1550 |
| % Conversion HCl to $CH_3Cl$ | 38 | 60 | 95 |
| % Conversion $CH_3OH$ to $CH_3Cl$ | 84 | 56 | 49 |
| Rate, grams/mol/hour per liter of catalyst | | | |
|     HCl feed | 2.27 | 1.03 | 0.88 |
|     $CH_3OH$ feed | 2.40 | 2.56 | 1.43 |
|     $CH_3Cl$ formed | 1.26 | 2.42 | 1.19 |

From Table 2 above it can be seen that trilaurylamine is an effective catalyst for reaction of methanol and hydrogen chloride.

EXAMPLE 13 - 15

To investigate the ability to thermally dissociate any tertiary amine-methyl chloride complex which may form in the processes of the present invention, the following examples were conducted.

EXAMPLE 13

To a glass Morton flask equipped with a bottom outlet, a stirrer, and a reflux condenser was charged a solution containing 25.4 weight percent of mineral spirits with the remainder a tertiary amine-methyl chloride complex of tricaprylyl methyl ammonium chloride. The solution was heated with stirring. Initially, a small amount of water present in the tricaprylyl methyl ammonium chloride charged azeotroped out from the solution and was removed. Gas was evolved at a rapid rate as the solution was heated at temperatures in the range of 165 to 200°C. The charge was then cooled down to room temperature. While the off-gas rate was peaking at temperatures in the range of 170-180°C, a sample of the off-gas was taken and identified by gas chromatographic analysis to be methyl chloride. Samples of the solution charged, and of the solution in the flask after cooling down were analyzed for ionic chloride concentration by titration with silver nitrate and analyzed 5.27 and 0.24 weight percent respectively.

These results demonstrate that methyl chloride can be recovered from a complex with a tertiary amine by heating, and that reaction occurs at a rapid rate at relatively mild temperatures. The solution in the flask after cooling down was also analyzed by Fourier Transform Infra-red Analysis and no presence of unsaturated hydrocarbons and alkyl chlorides was found, indicating that no reaction of the tertiary amine methyl chloride complex charged had occurred other than the generation of methyl chloride by thermal dissociation.

EXAMPLE 14

A solution containing 12.1 weight percent of V.M. & P. Naphtha and the 87.9 weight percent tricaprylyl methyl ammonium chloride was charged to the apparatus described in Example 13. The solution was heated with stirring and samples were periodically taken from the flask and analyzed for ionic chloride concentration with silver nitrate. The results are set forth below in Table 3.

Samples of the gas which evolved during the thermal dissociation were taken and analyzed, and found to be methyl chloride. Initially, a small amount of water present in the tricaprylyl methyl ammonium chloride charged azeotroped out from the solution and was removed.

Table 3

| Elapsed heating Time, min. | Temperature of reaction Mass, °C | Weight % Ionic Chloride in reaction mass | Percent RN·MeCl charged thermally dissociated |
|---|---|---|---|
| 0 | 25 | 6.17 | 0.00 |
| 100 | 157 | 5.53 | 10.4 |
| 114 | 163 | 4.80 | 22.2 |
| 126 | 169 | 3.47 | 43.8 |
| 138 | 175 | 1.43 | 76.8 |
| 146 | 181 | 0.62 | 90.0 |
| 157 | 190 | 0.30 | 95.1 |
| 190 | 190 | 0.29 | 95.3 |

EXAMPLE 15

Tricaprylyl methyl ammonium chloride without any solvent being added was charged to the apparatus described in Example 13, and heated with stirring. To follow the course of the reaction, samples of the liquid in the flask were taken periodically and analyzed for ionic chloride concentration by titration with silver nitrate. The results are set forth below in Table 4.

Samples of the gas which evolved during the thermal dissociation were taken and analyzed by gas chromatography, and found to be methyl chloride containing small amounts of dimethyl ether. The methyl chloride gas which evolved after 102 and 140 minutes of elapsed heating time was found to contain 0.113 and 0.035 weight percent of dimethyl ether, respectively, showing that very pure methyl chloride can be produced by the thermolysis of a tertiary amine methyl chloride complex.

Table 4

| Elapsed heating Time, min. | Temperature of reaction Mass, °C | Weight % Ionic Chloride in reation mass | Percent RN·MeCl charged thermally dissociated |
|---|---|---|---|
| 0 | 25 | 70.1 | 0.00 |
| 93 | 165 | 6.25 | 10.8 |
| 112 | 173 | 4.67 | 33.4 |
| 130 | 180 | 3.36 | 52.1 |
| 140 | 188 | 1.28 | 81.7 |
| 151 | 202 | 0.81 | 88.5 |

Examples 13-15 above demonstrate that the tertiary amine-methyl chloride complex can be thermally dissociated in an efficient manner. Further, a comparison of the results for Examples 14 and 15 show that the addition of a solvent to the complex is beneficial to the dissociation, increasing the rate of thermolysis three to four fold.

The above-mentioned patents are hereby incorporated by reference.

Many variations of the present invention will suggest themselves to those skilled in this art in light of the above-detailed description. For example, instead of employing trilaurylamine as the tertiary amine, other tertiary amines such as tri-n-octylamine, tri-iso-octylamine, triethanolamine, methyldioctylamine, ethyldioctylamine, mixtures thereof and the like can be effectively employed. Further, the aqueous hydrochloric acid stream can originate from other processing side streams in addition to the side stream of the hydrolysis of an alkylhalosilane. All such obvious modifications are within the full intended scope of the appended claims.

## Claims

1. A process for the recovery of hydrogen chloride from an aqueous hydrochloric acid stream and concurrent production of methyl chloride comprising the steps of :
   (a) contacting an aqueous hydrochloric acid stream with a stream comprising a tertiary amine to form a hydrogen chloride depleted stream and a stream comprising hydrogen chloride-tertiary amine complex;
   (b) separating said hydrogen chloride depleted stream from said stream comprising hydrogen chloride-tertiary amine complex;
   (c) contacting said separated stream comprising hydrogen chloride-tertiary amine complex with methanol to form a stream comprising a tertiary amine, water and methyl chloride; and
   (d) recovering methyl chloride from the product stream of step (c).

2. A process as defined in Claim 1 wherein said hydrochloric acid stream and said stream comprising a tertiary amine are contacted in countercurrent fashion in step (a).

3. A process as defined in Claim 1 or Claim 2 wherein said tertiary amine is of low volatility.

4. A process as defined in any preceding claim wherein said alcohol comprises a straight chain or branched alkyl alcohol.

5. A process as defined in any preceding claim further comprising the step (e) recovering the tertiary amine from step (d) and recycling said recovered tertiary amine to said stream comprising a tertiary amine in step (a).

6. A process as defined in any preceding claim wherein the stream formed in step (c) comprises a tertiary amine-methyl chloride complex and said step (d) recovery of methyl chloride comprises the steps of
   (i) recovering the complex of tertiary amine and methyl chloride from said step (c);
   (ii) heating the tertiary amine-methyl chloride to thermally dissociate the said complex and removing methyl chloride gas and recovering the tertiary amine.

7. A process as defined in Claim 6 wherein said dissociation step (d) (ii) comprises the addition of a solvent to said tertiary amine-hydrogen chloride complex.

8. A process as defined in Claim 6 wherein said dissociation step comprises heating said complex to a temperature ranging from about 140° to about 200°C.

9. A process as defined in any preceding claim wherein the molar ratio of hydrogen chloride in the aqueous hydrochloric acid contacted with tertiary amine in step (a) ranges from about 0.5 to about 2.0.

10. A process for the production of a siloxane composition comprising :
    (a) silating a methyl chloride stream to form a methylchlorosilane;
    (b) hydrolyzing said methylchlorosilane with the addition of water to form a siloxane product and aqueous hydrochloric acid side product;
    (c) contacting said aqueous hydrochloric acid side product with a tertiary amine to form a hydrogen chloride depleted aqueous phase and a phase comprising a tertiary amine-hydrogen chloride complex;
    (d) reacting said phase comprising a tertiary amine-hydrogen chloride complex with methanol to form a tertiary amine-methyl chloride complex and water;
    (e) adding a hydrocarbon solvent to said tertiary amine-methyl chloride complex and heating to thermally dissociate said tertiary amine-methyl chloride complex to form a methyl chloride gas;
    (f) recycling said methyl chloride gas to said silating step (a).

# FIG.1

# FIG.2

FIG. 3

European Patent
Office

**EUROPEAN SEARCH REPORT**

Application Number

EP 93 30 1818

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 019 699 (CHEMISCHE WERKE HÜLS) * claim 1 * | 1 | C01B7/07 C07F7/08 |
| A | DATABASE WPIL Week 8951, Derwent Publications Ltd., London, GB; AN 89-374140 & JP-A-1 279 912 (SHINETSU CHEM IND KK) * abstract * | 1 | |
| A | DATABASE WPIL Week 8323, Derwent Publications Ltd., London, GB; AN 83-54670K & JP-A-58 070 879 (PERMELEC DENKYOKU K) * abstract * | 1 | |
| A,D | US-A-2 570 495 (SCOTT) * claim 1 * | 1 | |
| A | FR-A-2 518 099 (GENERAL ELECTRIC CO) * claim 1 * | 10 | TECHNICAL FIELDS SEARCHED (Int. Cl.5) |
| A | DE-A-3 202 558 (BAYER AG) * claim 1 * | 10 | C01B C07F |

The present search report has been drawn up for all claims

| Place of search | Date of completion of the search | Examiner |
|---|---|---|
| BERLIN | 17 MAY 1993 | CLEMENT J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)